# EUROPÄISCHE PATENTANMELDUNG

(11) **EP 3 424 590 A1**
(43) Veröffentlichungstag der Anmeldung: **09.01.2019**
(21) Anmeldenummer: 17020283.2
(22) Anmeldetag: 07.07.2017
(51) Int. Cl.: B01J 19/32

(54) **PACKUNG ZUM STOFF- UND/ODER ENERGIEAUSTAUSCH MIT GETRENNTEN PACKUNGSEINHEITEN**

(71) Anmelder: Linde Aktiengesellschaft, 80331 München (DE)
(72) Erfinder: Matten, Christian, 82049 Pullach (DE); Bauer, Ludwig, 85114 Buxheim (DE)
(74) Vertreter: Meilinger, Claudia Sabine

(57) **Zusammenfassung**

Die Erfindung betrifft eine Packung (10) zum Stoff- und/oder Energieaustausch zwischen einer ersten fluiden Phase (F) und einer zweiten fluiden Phase (G), aufweisend eine Mehrzahl von Packungseinheiten (11) mit jeweils einer Mehrzahl an Packungselementen (12), wobei die Packungseinheiten (11) bezüglich ihrer Längsachsen (L) parallel zueinander angeordnet sind, wobei die Packungseinheiten (11) in einer radialen Richtung (r) senkrecht zu den Längsachsen (L) nebeneinander angeordnet sind, und wobei die Packungseinheiten (11) jeweils eine in Bezug auf die jeweilige Längsachse (L) umlaufende, geschlossene Wandung (15) aufweisen.

Weiterhin betrifft die Erfindung eine Kolonne (20) zum Stoff und/oder Energieaustausch zwischen einer ersten fluiden Phase (F) und einer zweiten fluiden Phase (G) aufweisend wenigstens eine erfindungsgemäße Packung (10), ein Verfahren zur Herstellung einer Packung (10) und ein Verfahren zum Stoff- und/oder Energieaustausch zwischen einer ersten fluiden Phase (F) und einer zweiten fluiden Phase (G) unter Verwendung der erfindungsgemäßen Packung (10).

## Beschreibung

Die Erfindung betrifft eine Packung und eine Kolonne zum Stoff- und/oder Energieaustausch zwischen einer ersten fluiden (z.B. flüssigen) Phase und einer zweiten fluiden (z.B. gasförmigen) Phase sowie ein Herstellungsverfahren für eine erfindungsgemäße Packung und ein Verfahren zum Stoff- und/oder Energieaustausch.

Stoffaustauschpackungen nach dem Stand der Technik dienen üblicherweise zum Stoff- und/oder Energieaustausch zwischen zwei Phasen, z.B. einer flüssigen und einer gasförmigen Phase. Dabei wird z.B. die flüssige Phase im Gegenstrom zu der gasförmigen Phase durch eine entlang einer Kolonnenlängsachse erstreckte Kolonne geführt, wobei Stoffaustauschpackungen im Vergleich zu einfachen Stoffaustauschböden für eine verbesserte laterale Vermischung der Phasen senkrecht zur Kolonnenlängsachse innerhalb der Kolonne und damit für einen verbesserten Phasenkontakt sorgen. Zu diesem Zweck werden nach dem Stand der Technik sowohl unstrukturierte (Füllkörper-) Packungen als auch strukturierte Packungen mit einer definierten räumlichen Struktur eingesetzt.

In der Verfahrenstechnik kommen Stoffaustauschpackungen beispielsweise in Rektifikationskolonnen, Destillationskolonnen und Waschkolonnen zum Einsatz. Dabei ist die besagte Quervermischung zwischen den Phasen für eine Vielzahl von Gas-Flüssig-Kontaktapparaten, z.B. Rektifikations- und Destillationskolonnen eine wichtige Eigenschaft. Ähnliche Packungen können ebenfalls in Elementen für die Tropfenabscheidung oder Mischern verwendet werden.

Zur Herstellung von Packungen werden gemäß dem Stand der Technik insbesondere die folgenden konventionellen Fertigungsmethoden eingesetzt:
- Fertigung von strukturierten Packungen und Füllkörpern aus Metall, z.B. durch Biegen, Tiefziehen und/oder Stanzen von Blechen;
- Fertigung von strukturierten Packungen und Füllkörpern aus Kunststoffen, z.B. mittels Spritzguss und/oder Warmverformung von Folien;
- Fertigung von Packungen auf Basis von Pellets durch Pelletierung aus feinkörnigem Material, wobei gegebenenfalls eine Nachbearbeitung mittels Sintern erfolgt;
- Aufbringen einer Beschichtung auf ein Trägermaterial (Coaten), z.B. bei Katalysatoren auf Keramikbällen.

Häufige Probleme beim Einsatz von Packungen nach dem Stand der Technik sind Maldistribution, das heißt eine inhomogene Verteilung der ersten und/oder zweiten fluiden Phase, sowie Randgängigkeit, das heißt eine unerwünschte Strömung der Phasen am Rand der Kolonne. Diese Probleme ergeben sich insbesondere durch die Packungsstruktur und werden gegebenenfalls durch diese verstärkt.

Maldistributionen, die im Extremfall zur vollständigen Entmischung der ersten und zweiten fluiden Phase führen können, entstehen insbesondere durch ungehinderten Queraustausch der Phasen zwischen den kleinsten sich wiederholenden Einheiten, da die völlig entmischte Strömungsform die mit dem geringsten Druckverlust ist. Ist andererseits eine Maldistribution von außen aufgeprägt worden (z. B. durch ungleichmäßige Aufgabe der Phasen, inhomogene Struktur der Packung), kann Queraustausch eine Selbstheilung bewirken. Da sich die Maldistribution mit zunehmendem Packungs- bzw. Kolonnendurchmesser verstärkt, wird nach dem Stand der Technik bei der Dimensionierung der Packungshöhe in kleinen Kolonnen ein Basis-HETP-Wert (auch Höhenäquivalent eines theoretischen Bodens genannt) gemessen, der dann in Abhängigkeit von Durchmesser und Betthöhe der Kolonne vergrößert wird.

Nach dem Stand der Technik werden Füllkörper- und strukturierte Packungen mit konventionellen Herstellungsmethoden wie Biegen und Stanzen von Metallblechen produziert. Die Packungen werden danach in ihrer Leistungsfähigkeit getestet und charakterisiert und das Design der Packungen wird in einem gewissen Rahmen optimiert.

Eine solche Optimierung beschränkt sich nach dem Stand der Technik auf die Auswahl eines Packungstyps und die Berechnung des zugehörigen Durchmessers (nach dem Ort der höchsten Belastung innerhalb eines Abschnittes). Die Packungshöhe ergibt sich nach der Anzahl der theoretischen Stufen multipliziert mit der Stoffaustauschhöhe für einen theoretischen Boden. Die Kenntnis der Stoffaustauschhöhe eines theoretischen Bodens beruht meist auf Erfahrungswerten und Testergebnissen.

Zur weiteren Optimierung von Packungen für den konkreten Anwendungsfall wäre es wünschenswert, die Packungen optimal auf die Last anzupassen, am besten veränderbar über die Packungshöhe, so dass das Packungsdesign an jedem Ort optimal auf die dort herrschenden Anforderungen abgestimmt ist. Dadurch würden sich Einsparungen des Packungsdurchmessers und/oder der Packungshöhe ergeben.

Weiterhin wäre es wünschenswert, neuartige Packungen zu entwickeln, die im Gegensatz zu Packungen nach dem Stand der Technik auch für den Einsatz unter ungünstigen Bedingungen (z.B. bei hohen Drücken oder Fouling, also Verunreinigungen der Packung, z.B. durch Ablagerungen und/oder Polymerbildung) geeignet sind. Dadurch könnten unter solchen Bedingungen statt Böden die speziell designten Packungen eingesetzt werden, was insbesondere kleinere Kolonnenabmessungen und einen deutlich niedrigeren Druckverlust ermöglichen würde.

Experimente zur Packungsoptimierung sind umso schneller aufbaubar, kostengünstiger betreibbar und leichter veränderbar, je kleiner die Dimensionierung der im Experiment verwendeten Packungen ist. Es wäre daher wünschenswert, Packungen mit nur wenigen Zentimetern Durchmesser für Experimente zur Verfügung zu haben. Hierbei wäre die notwendige Gas- und Flüssigkeitslast im Bereich von <100kg/h.

Ein *scale-up* (also eine Vergrößerung der Dimensionen) von Packungsstrukturen, die in einer kleinen Versuchskolonne getestet wurden, auf größere Kolonnendurchmesser ist nicht bezüglich des Querschnitts linear, sondern muss mit zusätzlichen Sicherheiten erfolgen. Hierbei ist bei Packungen nach dem Stand der Technik der sogenannte *scale up -* Faktor in der Regel nicht bekannt, sondern muss empirisch ermittelt werden.

Mit dem Einsatz von 3D-Druck-Herstellungsmethoden ist es prinzipiell möglich, für bestimmte Anwendungsfälle optimierte Packungen zu fertigen. Dabei ist jedoch zu beachten, dass der 3D-Druck von Strukturen im Größenbereich von typischen Kolonnendurchmessern (z.B. ca. 1 m bis 8 m Durchmesser) nach dem Stand der Technik nur zu relativ hohen Kosten möglich ist.

Hieraus ergibt sich die Aufgabe, eine Packung für eine Kolonne sowie ein Herstellungsverfahren und ein Verfahren zum Stoff- und/oder Energieaustausch zur Verfügung zu stellen, die bezüglich der genannten Nachteile des Standes der Technik verbessert sind.

Diese Aufgabe wird durch die Packung nach Anspruch 1, die Kolonne nach Anspruch 10, das Herstellungsverfahren nach Anspruch 14 und das Verfahren zum Stoff- und/oder Energieaustausch nach Anspruch 15 gelöst.

Vorteilhafte Ausgestaltungen der Packung sind Gegenstand der Unteransprüche 2 bis 9 und vorteilhafte Ausgestaltungen der Kolonne sind Gegenstand der Unteransprüche 11 bis 13. Die Erfindung wird im Folgenden beschrieben.

Ein erster Aspekt der Erfindung betrifft eine Packung zum Stoff- und/oder Energieaustausch zwischen einer ersten fluiden Phase, z.B. einer flüssigen Phase, und einer zweiten fluiden Phase, z.B. einer gasförmigen Phase, wobei die Packung eine Mehrzahl an Packungseinheiten (alternativ auch als Packungsmodule bezeichnet) aufweist, wobei die Packungseinheiten jeweils eine Mehrzahl an Packungselementen aufweisen, und wobei die Packungseinheiten jeweils eine Längsachse aufweisen, und wobei die jeweilige Packungseinheit entlang der jeweiligen Längsachse von einer ersten fluiden Phase, z.B. einer flüssigen Phase, und einer zweiten fluiden Phase, z.B. einer gasförmigen Phase, insbesondere im Gegenstrom, durchströmbar ist, und wobei die Packungselemente jeweils eine Austauschfläche aufweisen, die dazu ausgebildet ist, die erste fluide Phase und die zweite fluide Phase beim Durchströmen der jeweiligen Packungseinheit derart in Kontakt treten zu lassen, dass an der Austauschfläche Stoffe und/oder Energie bzw. Wärme zwischen der ersten fluiden Phase und der zweiten fluiden Phase austauschbar sind.

Dabei ist erfindungsgemäß vorgesehen, dass die Packungseinheiten bezüglich ihrer Längsachsen parallel zueinander angeordnet sind, wobei die Packungseinheiten in einer radialen Richtung senkrecht zu den Längsachsen nebeneinander angeordnet sind, und wobei die Packungseinheiten jeweils eine in Bezug auf die jeweilige Längsachse umlaufende, geschlossene Wandung (auch als Mantel bezeichnet) aufweisen.

Hierbei ist die geschlossene Wandung fluiddicht, das heißt die Wandung ist für Fluide (also Gase und Flüssigkeiten), insbesondere die erste und zweite fluide Phase, undurchlässig. Durch die geschlossene Wandung kann also ein Stoffaustausch senkrecht zu den Längsachsen der Packungseinheiten nur innerhalb der jeweiligen Packungseinheiten erfolgen. Für einen Fluidstrom in Richtung der Längsachsen der Packungseinheiten sind die jeweiligen Packungseinheiten dagegen insbesondere offen, also durchlässig für Fluide. An den jeweiligen Stirnseiten sind die Packungseinheiten vorzugsweise offen oder weisen eine Wandung mit Durchbrüchen auf, weisen in anderen Worten also keine geschlossene Wandung auf.

Die besagte Wandung kann integral mit den jeweiligen Packungselementen, beispielsweise durch additive Fertigung (3D-Druck), oder als separate Struktur ausgebildet sein.

Insbesondere weisen die Packungseinheiten entlang der Längsachse die gleiche Länge auf und sind so ausgerichtet, dass sie an ihren Enden bündig miteinander abschließen.

Die besagte Packung eignet sich insbesondere zur Verwendung in Stoffaustausch-, Destillations-, Rektifikations- und Waschkolonnen, sowie in Elementen zur Tropfenabscheidung oder Mischern.

Dadurch dass kein Queraustausch zwischen den einzelnen Packungseinheiten stattfinden kann, wird vorteilhafterweise einer Entmischung der ersten und/oder zweiten fluiden Phase entgegengewirkt.

Die erfindungsgemäße Packung ist insbesondere auf die örtliche Belastung und die Anforderungen innerhalb einer Kolonne optimal abgestimmt. Eine solche Packung wird im Kontext dieser Anmeldung auch als optimierte Packung bezeichnet.

Die Packungselemente der erfindungsgemäßen Packung weisen insbesondere senkrecht zu der jeweiligen Längsachse eine maximale Querschnittserstreckung (je nach geometrischer Form z.B. einen Durchmesser oder eine Seitenlänge) zwischen 50 mm und 150 mm auf. Dabei kann die Querschnittsfläche senkrecht zu der jeweiligen Längsachse der Packung z.B. 0,02 m² betragen.

Packungseinheiten dieser Dimension lassen sich mit 3D-Druckverfahren nach dem Stand der Technik einfach und kostengünstig herstellen, da deren Erstreckung senkrecht zur jeweiligen Längsachse deutlich geringer ist als bei nicht modular aufgebauten Packungen.

Zudem ermöglichen derartige Packungseinheiten eine einfache und kostengünstige Durchführung von Experimenten zur Optimierung der Packung. Eine einzelne Packungseinheit kann z.B. in einem Versuchsstand vorab unter Realbedingungen getestet werden. Da für den Test einer einzelnen Packungseinheit nur ein kleiner Versuchsstand notwendig ist, ist der Betrieb (Heizung, Kühlung) und die Menge an Chemikalien kostengünstig. Diese Möglichkeit eröffnet einen Weg, um die Funktionsfähigkeit einer individuell optimierten Packung vor dem Einbau in die eigentliche Kolonne zu testen und zu beweisen. Damit kann insbesondere die meist geforderte Notwendigkeit entfallen, Referenzen für den erfolgreichen Einsatz eines Packungstyps vorzulegen.

Die besagten Packungselemente können insbesondere durch flächige Materiallagen wie strukturierte Packungsbleche oder Materialstränge gebildet sein, wobei die Materialstränge z.B. Gitterstrukturen bilden können. Die Packungselemente können aus beliebigen geeigneten Materialien, wie z.B. Metall oder Kunststoff, gebildet sein.

Die Packungseinheiten sind von einer ersten fluiden Phase und einer zweiten fluiden Phase entlang der jeweiligen Längsachse durchströmbar. Das heißt, die Packungseinheiten weisen Öffnungen bzw. Kanäle zwischen ihren Packungselementen auf, so dass sich für die fluiden Phasen ein Strömungsweg entlang der jeweiligen Längsachse ergibt, so dass die Packungselemente auf dem Strömungsweg umströmt oder durchströmt werden. Dabei müssen die Öffnungen bzw. Kanäle selbst nicht zwangsläufig entlang der jeweiligen Längsachse erstreckt sein, das heißt, der Strömungsweg muss nicht gerade entlang der jeweiligen Längsachse verlaufen. Hierbei kann es sich bei den fluiden Phasen z.B. um eine flüssige Phase, die durch die Packungselemente durch Wirkung der Schwerkraft entlang der jeweiligen Längsachse abwärts fließt, sowie eine gasförmige Phase, die durch die Packungselemente entlang der jeweiligen Längsachse aufsteigt, handeln.

Es ist dabei vorteilhaft, wenn die Austauschfläche der Packungselemente pro Volumeneinheit möglichst groß ist, wobei der auftretende Druckverlust für die jeweilige Anwendung noch tolerierbar sein muss.

Die Höhe der Packungseinheiten entlang der jeweiligen Längsachse bzw. entlang der Kolonnenlängsachse der erfindungsgemäßen Packung bemisst sich insbesondere so, dass eine Packung vollständig die Trennaufgabe eines Abschnittes übernimmt, wobei eine Kolonne durch Zu- oder Abzüge der ersten und/oder zweiten fluiden Phase in Abschnitte unterteilt ist. Innerhalb eines Abschnittes erfolgt insbesondere kein Sammeln, Mischen und Wiederverteilen der ersten und zweiten fluiden Phase. Dabei versteht es sich, dass die Packungseinheiten entlang der jeweiligen Längsachse aus mehreren Teileinheiten bestehen können, die separat, insbesondere mittels 3D-Druck, hergestellt werden und nach der separaten Herstellung miteinander verbunden, insbesondere verschweißt oder verklebt, werden, so dass eine einzelne Packung mit der notwendigen Höhe für die Trennaufgabe eines Abschnittes resultiert.

Die erfindungsgemäße Packung weist eine Mehrzahl an Packungseinheiten mit den oben beschriebenen Merkmalen auf. Das heißt, die Packungseinheiten sind z.B. in einer Kolonne derart nebeneinander (das heißt derart, dass die jeweilige Längsachse parallel zu der Kolonnenlängsachse verläuft) angeordnet, dass ein möglichst großer Anteil der Querschnittsfläche der Kolonne mit Packungseinheiten gefüllt ist. Dabei ergeben sich insbesondere Freiflächen zwischen den einzelnen Packungseinheiten und/oder zwischen den Packungseinheiten und dem Mantel der Kolonne.

Dadurch kann ein beliebig großer Kolonnenquerschnitt mit der stets gleichen Packungseinheit ausgestattet werden. Je größer dabei der Durchmesser der Kolonne ist, desto besser kann die Anordnung der einzelnen Packungseinheiten an die Kreisform durchgeführt werden, wodurch die Freifläche (also die Querschnittsfläche der Zwischenräume zwischen den einzelnen Packungseinheiten und/oder zwischen den Packungseinheiten und dem Mantel der Kolonne bezüglich der Packungs- bzw. Kolonnenlängsachse) prozentual kleiner wird. Da insbesondere an den Berührstellen der Packungseinheiten doppelte Wandstärke existiert, sollten die Wände so dünn wie möglich ausgeführt werden.

Durch die im Wesentlichen raumfüllende Anordnung der Packungseinheiten kann insbesondere jeder beliebige Kolonnendurchmesser mit den optimierten Packungseinheiten ausgestattet werden. Die ermittelte Kapazität einer Einzelpackung kann so ohne *scale*-*up*-Faktor auf jeden größeren Kolonnendurchmesser übertragen werden.

Weiterhin hat die Erfindung den Vorteil, dass alle Packungseinheiten identisch hergestellt und dann beliebig in der Kolonne angeordnet werden können, während konventionelle Böden und viele konventionelle Packungen aus unterschiedlichen Bauteilen bestehen (z.B. unterschiedliche Blechgrößen oder Packungssegmentgrößen).

Da die Packungseinheiten bezüglich der jeweiligen Funktion optimiert sind, ist vorteilhafterweise die Maldistribution vermindert oder entfällt ganz, wodurch insbesondere das Sammeln, Mischen und Wiederverteilen der ersten und zweiten fluiden Phase nach einer bestimmten Höhe entlang der jeweiligen Längsachse der Packungseinheiten bzw. Höhe der Kolonne entlang der Kolonnenlängsachse entfallen kann.

Weiterhin können die erste und zweite fluide Phase durch den Einsatz eines Flüssigkeitsverteilers und/oder Gasverteilers nahezu gleichmäßig auf alle Packungseinheiten verteilt werden. Die Packungseinheiten fungieren daher als voneinander unabhängige "Minikolonnen". - Ferner kann davon ausgegangen werden, dass für jede Packungseinheit der Basis-HETP-Wert gilt. Das bedeutet eine Reduzierung der Betthöhe, also der für eine Trennaufgabe notwendigen Höhe der Packungseinheiten entlang der jeweiligen Längsachse. Eine vorteilhafte Reduzierung der Kolonnenhöhe entlang der Kolonnenlängsachse wird somit insbesondere durch die Reduzierung der Betthöhe und das Entfallen von Wiederverteilung erreicht.

Beim Betrieb der Kolonne wird insbesondere jede einzelne Packungseinheit mit der gleichen Menge der ersten und/oder zweiten fluiden Phase beaufschlagt. Eine solche Gleichverteilung der fluiden Phasen auf die Packungseinheiten ist vorteilhaft, da dadurch alle Packungseinheiten in gleicher Art funktionieren und der Trennvorgang (z.B. die Destillation/Wäsche/etc.) mit dem gleichen Ergebnis durchgeführt werden kann.

Die sorgfältige, gleiche Verteilung der fluiden Phasen ist auch deshalb wichtig, da im Gegensatz zu konventionellen Packungen zwischen den einzelnen Packungseinheiten keine Quervermischung mehr stattfindet, da die Packungseinheiten wie oben beschrieben jeweils eine umlaufende geschlossene Wandung aufweisen.

Eine Gleichverteilung einer gasförmigen Phase kann z.B. aufgrund des Druckverlusts der einzelnen Packungseinheiten erfolgen. Haben alle einzelnen Packungseinheiten den gleichen Druckverlust bei der jeweiligen Flüssigkeitslast, so stellt sich auch bei allen Packungseinheiten ein gleicher Gasstrom ein.

Gemäß einer Ausführungsform der Erfindung bilden die Packungselemente jeweils eine flächige Struktur, wobei die flächige Struktur insbesondere parallel oder geneigt zu der Längsachse der jeweiligen Packungseinheit verläuft.

Das bedeutet, dass die Packungselemente jeweils aus einem flächigen Material, insbesondere aus einem Blech, gebildet sein können, die auch als Packungsbleche bezeichnet werden. Die Packungselemente können aus beliebigen geeigneten Materialien, wie z.B. Metall oder Kunststoff, gebildet sein.

Weiterhin können die Packungselemente (wie Packungsbleche) der Packung sogenannte Primär- und ggf. Sekundärstrukturen aufweisen, die den Stoffaustausch innerhalb einer Packungseinheit weiter verbessern. Bei solchen Strukturen kann es sich z.B. um Rillen oder Wellen handeln. Die Packungselemente können ferner Durchgangsöffnungen zur Verbesserung des Stoffaustausches aufweisen. Insbesondere sind dabei die Primär- und ggf. die Sekundärstrukturen (d.h. deren Form, Größe und Ausrichtung) den jeweiligen Anforderungen an den Stofftransfer und die Menge der ersten und zweiten fluiden Phase, mit denen die Packungseinheiten pro Zeiteinheit beaufschlagt wird, optimal angepasst.

Gemäß einer weiteren Ausführungsform bildet die jeweilige Packungseinheit einen Zylinder mit einer elliptischen, kreisförmigen oder vieleckigen (also polygonförmigen) Grundfläche, insbesondere einen Kreiszylinder. Eine vieleckige Grundfläche ist dabei z.B. dreieckig, viereckig, fünfeckig, sechseckig oder achteckig. Dabei können z.B. die Packungselemente der jeweiligen Packungseinheit einen derartigen Zylinder bilden.

Gemäß einer weiteren Ausführungsform bildet die jeweilige Packungseinheit einen Quader. Dabei können z.B. die Packungselemente der jeweiligen Packungseinheit den Quader bilden.

Gemäß einer weiteren Ausführungsform bildet die jeweilige Packungseinheit ein Prisma mit einer sechseckigen Grundfläche.
Dabei ist unter dem Begriff Prisma ein geometrischer Körper zu verstehen, dessen Seitenkanten parallel und gleich lang sind und dessen Grundfläche ein Vieleck ist. Beispielsweise können die Packungselemente der jeweiligen Packungseinheit ein Prisma mit einer sechseckigen Grundfläche bilden. Die Packungseinheiten ähneln in dieser Ausführungsform im Querschnitt Bienenwaben. Eine solche sechseckige Grundfläche ist besonders gut geeignet, einen Kreisquerschnitt zu füllen, so dass nur geringe Freiflächen, bzw. Zwischenräume, entstehen. Dadurch kann die Querschnittsfläche der Kolonne besonders gut ausgenutzt werden und Ströme der ersten und zweiten fluiden Phase durch die Freiflächen - die eine inhomogene Verteilung der Phasen bedingen und die Effektivität der Kolonne senken würden - werden minimiert.

Gemäß einer weiteren Ausführungsform weisen die Packungseinheiten jeweils eine Außenseite auf, wobei die Außenseite durch eine umlaufende Wandung der jeweiligen Packungseinheit gebildet ist, und wobei sich jeweils benachbarte Packungseinheiten an ihren Außenseiten berühren. Das heißt, die Außenseiten der Packungseinheit sind jeweils von einer Wandung vollständig verschlossen. Mit anderen Worten, jede Packungseinheit weist eine in Bezug auf ihre Längsachse umlaufende Wandung auf, wobei sich in einer Ausführungsform der erfindungsgemäßen Packung die Wandungen der in der radialen Richtung benachbarten Packungseinheiten berühren.

Gemäß einer weiteren Ausführungsform weisen die Packungseinheiten gemäß einer weiteren Ausführungsform jeweils eine Außenseite auf, wobei die Packung zumindest eine erste Packungseinheit sowie eine an der ersten Packungseinheit anliegende zweite Packungseinheit aufweist, wobei die Außenseite der ersten Packungseinheit einen offenen Abschnitt aufweist, und wobei die Außenseite der zweiten Packungseinheit einen an dem offenen Abschnitt anliegenden Abschnitt aufweist, der durch ein Wandungselement der zweiten Packungseinheit verschlossen ist, so dass die Packungselemente der beiden Packungseinheiten durch das Wandungselement voneinander getrennt sind. Mit anderen Worten, jede Packungseinheit weist eine in Bezug auf ihre Längsachse umlaufende Wandung auf, wobei zwei benachbarte Packungseinheiten einen gemeinsamen Wandungsabschnitt besitzen.

Es liegt also ein gemeinsames Wandungselement vor, das nur an einer der beiden Packungseinheiten vorgesehen ist. Durch das Wandungselement kann kein Stoffaustausch zwischen der ersten und zweiten Packungseinheit über den offenen Abschnitt erfolgen.

Die besagten offenen Abschnitte entsprechen z.B. durch Kanten getrennten Teilflächen einer Mantelfläche eines die Packungseinheit einhüllenden Körpers. Die Außenseite einer Packungseinheit in Form eines Primas mit sechseckiger Grundfläche hat beispielsweise sechs rechteckige Teilflächen.

Die beschriebene Ausführungsform, bei der zwei benachbarte Packungseinheiten einen gemeinsamen Wandungsabschnitt besitzen, kann z.B. durch Packungseinheiten mit einer sechseckigen Grundfläche realisiert werden, die an drei Teilflächen ihrer Außenseite Wandungselemente aufweisen, wobei die übrigen drei Teilflächen offene Abschnitte bilden. Dabei können die inneren Strukturen (z.B. die Packungselemente) sowie die Wandungselemente, z.B. an deren Endkanten, Verbindungselemente aufweisen, die sich formschlüssig mit entsprechenden Verbindungselementen der Wandungselemente der benachbarten Packungseinheiten verbinden lassen. Solche Verbindungselemente können z.B. mittels 3D-Druck zusammen mit den Packungselementen und/oder Wandungselementen gedruckt werden.

Gemäß einer weiteren Ausführungsform weist jeweils eine von zwei aneinander anliegenden Packungseinheiten eine Außenseite mit einem offenen Abschnitt auf, wobei die andere der beiden Packungseinheiten einen an den offenen Abschnitt anliegenden Abschnitt aufweist, der durch ein Wandungselement der anderen Packungseinheit verschlossen ist, so dass die Packungselemente der jeweiligen beiden Packungseinheiten durch das jeweilige Wandungselement voneinander getrennt sind.

Dabei gibt es also zwischen je zwei benachbarten Packungseinheiten ein Wandungselement, das die betrachteten benachbarten Packungseinheiten trennt und dabei lediglich an einem der beiden Packungseinheiten vorgesehen bzw. festgelegt ist.

Gemäß einer weiteren Ausführungsform sind benachbarte Packungseinheiten mittels Verbindungselementen verbunden.

Gemäß einer weiteren Ausführungsform weisen die Packungseinheiten offene Stirnseiten auf, die in einer zu der jeweiligen Längsachse senkrechten Ebene liegen, wobei an einer der Stirnseiten eine Blende angeordnet ist, die dazu ausgebildet ist, einen Druckverlust einer über die jeweilige Stirnseite in die Packungseinheit eintretenden gasförmigen Phase zu bewirken. Das heißt, die Packungseinheiten sind an ihren Enden offen. Die besagten Stirnseiten sind also nicht durch eine Wandung geschlossen.

Gemäß einer weiteren Ausführungsform sind die Packungselemente der Packungseinheiten durch 3D-Drucken gebildet.

Dabei ist die Packung insbesondere auf die örtliche Belastung und die Anforderungen innerhalb einer Kolonne optimal abgestimmt.

Durch den Einsatz des 3D-Drucks ist es vorteilhafterweise möglich, eine beliebige Packungsstruktur, die optimal die örtliche Last und Anforderungen berücksichtigt, herzustellen. Diese Packung benötigt daher erwartungsgemäß eine geringere Querschnittsfläche senkrecht zu der Kolonnenlängsachse und eine niedrigere Höhe entlang der Kolonnenlängsachse verglichen mit konventionellen Kolonneneinbauten. Der Mantel einer solchen mit den erfindungsgemäßen Packungen ausgestatteten Kolonne kann daher kleiner verglichen mit dem Einsatz konventioneller Packungen ausgelegt werden.

Dieser Vorteil ergibt sich sowohl bei einer Neuauslegung von Kolonnen, wobei die Kosten der Kolonne aufgrund der kleineren Größe gesenkt werden können, aber auch insbesondere bei sogenannten Revamps, das heißt Modifikationsmaßnahmen bestehender Kolonnen, bei denen bei vorhandenem Mantel ein höherer Durchsatz (eventuell mit schärferer Trennung) benötigt wird.

Ein zweiter Aspekt der Erfindung betrifft eine Kolonne zum Stoff- und/oder Energieaustausch zwischen einer ersten fluiden (z.B. flüssigen) Phase und einer zweiten fluiden (z.B. gasförmigen) Phase aufweisend wenigstens eine Packung nach dem ersten Aspekt der Erfindung, wobei die Kolonne eine Kolonnenlängsachse aufweist, und wobei die Kolonne einen in Umfangsrichtung um die Kolonnenlängsachse umlaufenden Mantel aufweist, der einen Mantelraum umgibt, in dem die wenigstens eine Packung angeordnet ist, und wobei die Längsachsen der Packungseinheiten der wenigstens einen Packung parallel zu der Kolonnenlängsachse verlaufen.

Gemäß einer Ausführungsform weist die Packung in einem Querschnitt senkrecht zu der Kolonnenlängsachse wenigstens eine Freifläche zwischen den Packungseinheiten bzw. zwischen den Packungseinheiten und dem Mantel auf, wobei die wenigstens eine Freifläche höchstens 20 %, insbesondere höchstens 10 %, einer senkrecht zu der Kolonnenlängsachse verlaufenden Querschnittsfläche des Mantelraums der Kolonne ausfüllt. Mit dem Begriff Freifläche ist dabei ein Teil der besagten Querschnittsfläche gemeint, an dem sich keine Packungseinheit befindet. Solche Freiflächen treten insbesondere dann auf, wenn die aneinander angrenzenden Packungseinheiten nicht formschlüssig aneinander anliegen, z.B. bei Packungseinheiten mit kreisförmigem Querschnitt. Die Freiflächen können dabei mit einem Stoff bzw. Material teilweise oder vollständig gefüllt sein oder frei bleiben.

Gemäß einer Ausführungsform weist die Kolonne einen Gasverteiler auf, der dazu ausgebildet ist, eine gasförmige Phase (d.h. die erste oder zweite fluide Phase), insbesondere gleichmäßig, auf die Packungseinheiten zu verteilen.

Eine gleichmäßige Verteilung der gasförmigen Phase bedeutet, dass alle Packungseinheiten der Packung im Wesentlichen mit demselben Druck und Volumenstrom der gasförmigen Phase beaufschlagt werden.

Gemäß einer weiteren Ausführungsform weist die Kolonne einen Flüssigkeitsverteiler auf, der dazu ausgebildet ist, eine flüssige Phase (d.h. die erste oder zweite fluide Phase), insbesondere gleichmäßig, auf die Packungseinheiten zu verteilen.

Eine gleichmäßige Verteilung der flüssigen Phase bedeutet, dass alle Packungseinheiten der Packung im Wesentlichen mit derselben Flüssigkeitsmenge der flüssigen Phase pro Zeit beaufschlagt werden.

Der Flüssigkeitsverteiler kann z.B. ein Flüssigkeitssammelgefäß mit Löchern aufweisen, wobei die Löcher derart angeordnet sind, dass eine definierte Anzahl Löcher beim bestimmungsgemäßen Betrieb der Kolonne jeweils über einer entsprechenden Packungseinheit angeordnet sind, so dass eine definierte Flüssigkeitsmenge in jede Packungseinheit gelangen kann. Dabei müssen Löcher derart gestaltet sein, dass die Flussrate durch alle Löcher gleich ist.

Durch die homogene Verteilung der Phasen auf die einzelnen Packungseinheiten, z.B. mittels des Flüssigkeits- und/oder Gasverteilers ist vorteilhafterweise kein Queraustausch mehr nötig, um eine Maldistribution zu verhindern oder zu vermindern.

Gemäß einer weiteren Ausführungsform weist die Kolonne wenigstens ein Dichtelement auf, das dazu ausgebildet ist, wenigstens eine Freifläche (im Querschnitt senkrecht zu der Kolonnenlängsachse) zwischen benachbarten Packungseinheiten der Packung oder zwischen der Packung und dem Mantel der Kolonne zu verschließen.

Hierdurch wird vorteilhafterweise das Auftreten von Störstellen in der homogenen Packungsstruktur vermindert, was die Effektivität der Kolonne erhöht.

Gemäß einer weiteren Ausführungsform weist die Kolonne einen Einlass zum Einspeisen der ersten fluiden Phase und/oder der zweiten fluiden Phase in die Kolonne und einen mit dem Einlass in Strömungsverbindung stehenden Auslass zum Abziehen der ersten fluiden Phase und/oder der zweiten fluiden Phase aus der Kolonne auf, wobei entlang der Kolonnenlängsachse, also in der Hauptströmungsrichtung der ersten und/oder zweiten fluiden Phase zwischen dem Einlass und dem Auslass lediglich eine Packung mit senkrecht zur Kolonnenlängsachse nebeneinander angeordneten Packungseinheiten angeordnet ist.

Dabei ist insbesondere der Einlass im Kopfbereich der Kolonne angeordnet und der Auslass ist im Sumpfbereich der Kolonne angeordnet. Die Kolonne kann natürlich auch mehrere Einlässe und Auslässe aufweisen. Für diesen Fall sind der besagte Einlass und der besagte Auslass, zwischen denen sich lediglich eine durchgehende Packung befindet, entlang der Kolonnenlängsachse zueinander benachbart, das heißt zwischen dem besagten Einlass und dem besagten Auslass befindet sich kein weiterer Einlass oder Auslass.

Der Einlass und der Auslass stehen außerdem mit den Packungseinheiten in Strömungsverbindung oder sind mit diesen in Strömungsverbindung bringbar, z.B. über einen jeweiligen Verteiler. Die Packungseinheiten der Packung verlaufen entlang der Kolonnenlängsachse durchgängig zwischen dem Einlass und dem Auslass, das heißt die Packungseinheiten sind über die gesamte Strecke zwischen dem Einlass und dem Auslass senkrecht zu der Kolonnenlängsachse voneinander getrennt, so dass kein Stofftransport zwischen den Packungseinheiten erfolgen kann. Dabei ist insbesondere ein Trennprozess zwischen der ersten und zweiten fluiden Phase zwischen dem Einlass und dem Auslass realisiert. Insbesondere sind zwischen dem Einlass und dem Auslass weder Stoßstellen von Packungslagen noch Flüssigkeitsverteiler angeordnet.

So können z.B. bei Rektifikationssäulen 10 oder mehr Trennstufen (auch als theoretische Böden bezeichnet), z.B. 10, 20, 30, 40, 50, 60, 70, 80, 90, 100, 110, 120, 130, 140, 150, 160, 170, 180, 190 oder 200 Trennstufen zwischen dem Einlass und dem Auslass realisiert werden.

Kolonnen mit solchen durchgängigen Packungseinheiten haben den Vorteil einer besonders großen Trennleistung, da insbesondere Verluste an Stoßstellen verschiedener Packungslagen und an Verteilern vermieden werden.

Gemäß einer weiteren Ausführungsform weisen die Packungseinheiten eine Längserstreckung entlang der jeweiligen Längsachse bzw. Kolonnenlängsachse und eine Quererstreckung senkrecht zur jeweiligen Längsachse bzw. Kolonnenlängsachse auf, wobei das Verhältnis der Längserstreckung zur Quererstreckung mindestens 2 zu 1, mindestens 5 zu 1, mindestens 10 zu 1, mindestens 15 zu 1, mindestens 20 zu 1, mindestens 25 zu 1, mindestens 30 zu 1, mindestens 40 zu 1, mindestens 50 zu 1, mindestens 60 zu 1, mindestens 70 zu 1, mindestens 80 zu 1, mindestens 90 zu 1 oder mindestens 100 zu 1 beträgt.

Derartige durchgängige Packungseinheiten können z.B. mittels 3D-Druck entlang der Längsachse einstückig gefertigt werden. Alternativ dazu ist es z.B. auch denkbar, Teilstücke von Packungseinheiten mittels 3D-Druck zu erzeugen, wobei an den Endabschnitten der Teilstücke jeweils zueinander passende Gewinde gedruckt werden, und wobei die Teilstücke mittels der Gewinde miteinander verschraubt werden, so dass aus mehreren entlang der Längsachse zusammengefügten Teilstücken eine Packungseinheit gebildet wird.

Ein dritter Aspekt der Erfindung betrifft ein Verfahren zur Herstellung einer Packung nach dem ersten Aspekt der Erfindung, wobei zumindest die Packungselemente einer Packungseinheit der Packung mittels eines 3D-Druckverfahrens gedruckt werden, wobei insbesondere auch die jeweilige Wandung der jeweiligen Packungseinheit, mittels des 3D-Druckverfahrens gedruckt wird.

Gemäß einer weiteren Ausführungsform werden die Packungselemente bzw. die Packung als einstückige Einheit schichtweise aus einem pulverförmigem Werkstoff, z.B. aufweisend ein Metall oder einen Kunststoff, gedruckt, wobei nacheinander mehrere Schichten des Werkstoffs übereinander aufgebracht werden, wobei jede Schicht vor dem Aufbringen der nächstfolgenden Schicht mittels eines Laserstrahls an einer Druckposition, die einem Querschnittsbereich der herzustellenden Einheit entspricht, erhitzt wird und dabei an der darunterliegenden Schicht fixiert wird, insbesondere mit dieser verschmolzen wird.

Dabei können einzelne Packungselemente gefertigt werden, die anschließend zu einer Packungseinheit verbunden werden. Alternativ dazu kann auch die gesamte Packungseinheit aus mehreren Packungselementen, sowie insbesondere die jeweilige Wandung (gegebenenfalls zusammen mit Verbindungsstrukturen zwischen den Packungselementen), in einem Schritt mittels 3D-Druck gedruckt werden.

In einer Ausführungsform des Verfahrens werden Berge und Täler oder Rillen bei dem 3D-Druckverfahren, also bei der Erzeugung der jeweiligen Packungseinheiten, gedruckt.

In einer weiteren Ausführungsform des Verfahrens werden Durchgangsöffnungen der Packungselemente bei dem 3D-Druckverfahren gedruckt. Das heißt, bei der Erzeugung der Packungselemente durch das 3D-Druckverfahren wird an entsprechenden Stellen kein Werkstoff aufgebracht, so dass an diesen Stellen die Durchgangsöffnungen gebildet werden.

Das Aufbringen der Schichten kann z.B. entlang der jeweiligen Längsachse oder senkrecht zur jeweiligen Längsachse der Packungseinheiten erfolgen.

Eine geeignete 3D-Druckvorrichtung zum Aufbringen eines pulverförmigen Werkstoffs weist z.B. zumindest eine Laserquelle zur Erzeugung eines Laserstrahls, eine Stoffzuführung zur Bereitstellung des Werkstoffs und eine Transportvorrichtung auf, wobei die Transportvorrichtung dazu ausgebildet ist, das Werkstück, also das Packungselement bzw. die Packungseinheit, gegen die Laserquelle und die Stoffzuführung zu bewegen und/ oder die Laserquelle und die Stoffzuführung gegen das Werkstück zu bewegen.

Gemäß einer weiteren Ausführungsform werden die Packungselemente bzw. die Packungseinheiten als einstückige Einheit durch Aufbringen eines flüssigen Werkstoffs gefertigt. Um überhängende Strukturen zu fertigen, müssen hierfür insbesondere Stützkonstruktionen aus einem Material verwendet werden, das nach dem Druckvorgang entfernbar ist. Für solche Stützstrukturen kann z.B. wasserlösliches Material verwendet werden, wenn der Werkstoff, aus dem die Packungselemente bzw. die Packungseinheiten gedruckt werden, selbst nicht wasserlöslich ist.

Eine geeignete 3D-Druckvorrichtung zum Aufbringen eines flüssigen Werkstoffs weist z.B. zumindest eine Düse zum Aufbringen des flüssigen Werkstoffs auf, wobei die Düse dazu ausgebildet ist, den flüssigen Werkstoff an einer vorbestimmten Position des Werkstücks, also das Packungselement bzw. die Packungseinheit, aufzubringen.

Ein vierter Aspekt der Erfindung betrifft ein Verfahren zum Stoff- und/oder Energieaustausch zwischen einer ersten fluiden Phase, insbesondere einer flüssigen Phase, und einer zweiten fluiden Phase, insbesondere einer gasförmigen Phase, insbesondere unter Verwendung einer Kolonne nach dem zweiten Aspekt der Erfindung, wobei die erste fluide Phase und die zweite fluide Phase, insbesondere im Gegenstrom, durch wenigstens eine Packung nach dem ersten Aspekt der Erfindung geleitet werden, wobei die Packungseinheiten der wenigstens einen Packung von der ersten fluiden Phase und der zweiten fluiden Phase entlang der jeweiligen Längsachse durchströmt werden, und wobei an der Austauschfläche der Packungselemente Stoffe und/oder Energie bzw. Wärme zwischen der ersten fluiden Phase und der zweiten fluiden Phase ausgetauscht werden.

Weitere Aspekte und Ausführungsformen der Erfindung ergeben sich aus der nachfolgenden Figurenbeschreibung.

Es zeigen
- Fig. 1: eine schematische Darstellung einer erfindungsgemäßen wabenförmigen Packungseinheit;
- Fig. 2: eine schematische Darstellung einer erfindungsgemäßen Packungseinheit in Form eines Kreiszylinders;
- Fig. 3: eine schematische Darstellung einer erfindungsgemäßen Packungseinheit in Form eines Quaders;
- Fig. 4: eine perspektivische Darstellung eines Teils einer erfindungsgemäßen Kolonne mit wabenförmigen Packungseinheiten;
- Fig. 5: eine schematische Querschnittsdarstellung eines Teils einer erfindungsgemäßen Kolonne mit wabenförmigen Packungseinheiten;
- Fig. 6: eine schematische Querschnittsdarstellung eines Teils einer erfindungsgemäßen Kolonne mit kreiszylinderförmigen Packungseinheiten;
- Fig. 7: eine schematische Querschnittsdarstellung einer erfindungsgemäßen Kolonne.

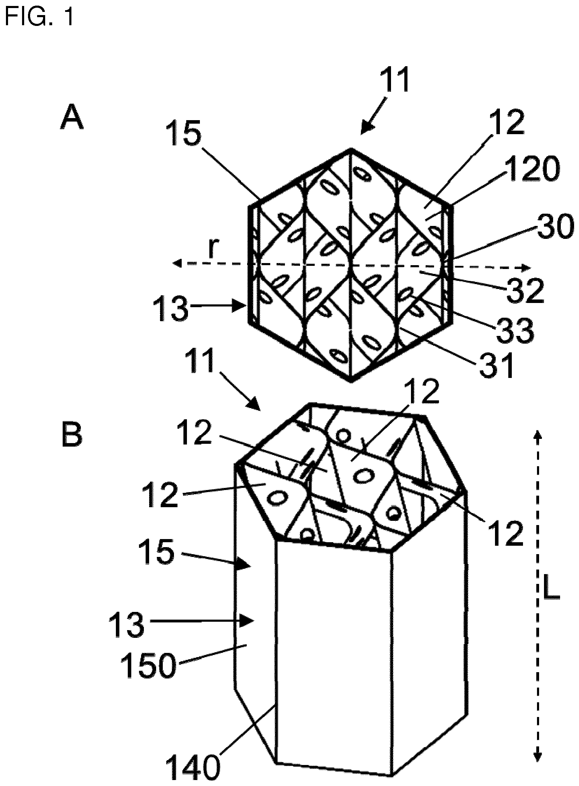

Die Figur 1A zeigt ein schematische Darstellung einer erfindungsgemäßen wabenförmigen Packungseinheit 11 im Querschnitt bezüglich einer Längsachse L der Packungseinheit 11 (siehe Figur 1 B) und die Figur 1B zeigt die entsprechende Packungseinheit 11 in einer perspektivischen Ansicht. In der Querschnittsdarstellung der Figur 1A ist eine senkrecht zu der Längsachse L verlaufende radiale Richtung r dargestellt.

Die Packungseinheit 11 weist eine Mehrzahl an Packungselementen 12 auf, die jeweils in einer zu der Längsachse L geneigten Ebene verlaufen und eine umlaufende Außenseite 13 der Packungseinheit 11 bilden. Dabei weist die Packungseinheit 11 weiterhin an seiner Außenseite 13 eine Wandung 15 auf, welche die Außenseite 13 in Umfangsrichtung bezüglich der Längsachse L vollständig verschließt, so dass ein Stoffaustausch senkrecht zu der Längsachse L nur innerhalb der Packungseinheiten 11, aber nicht zwischen den Packungseinheiten 11 erfolgen kann, wenn die Packungseinheiten 11 innerhalb einer erfindungsgemäßen Packung 10 in der radialen Richtung r nebeneinander angeordnet sind.

Die Packungselemente 12 weisen jeweils eine Austauschfläche 120 auf, die dazu ausgebildet ist, eine erste fluide Phase F und eine zweite fluide Phase G beim Durchströmen der jeweiligen Packungseinheit 11 derart in Kontakt treten zu lassen, dass an der Austauschfläche 120 Stoffe und/oder Energie zwischen der ersten fluiden Phase F und der zweiten fluiden Phase G austauschbar sind.

Wie in Figur 1A gezeigt, weisen die Packungselemente 12 weiterhin eine Wellenstruktur aus Bergen 30 und Tälern 31 auf, die über Flanken 32 miteinander verbunden sind. In der hier gezeigten Ausführungsform liegen jeweils die Berge 30 benachbarter Packungselemente 12 aneinander an, so dass durch die Wellenstruktur Kanäle in der Packungseinheit 11 entstehen. Die Berge 30 und Täler 31 (und somit die gebildeten Kanäle) verlaufen dabei insbesondere unter einem Neigungswinkel bezüglich der jeweiligen Längsachse L, so dass die Phasen F,G durch die Wellenstruktur innerhalb der Packungseinheit 11 sowohl zu der Wandung 15 also auch von der Wandung 15 weg geleitet werden.

Die in Figur 1A gezeigte Packungseinheit 11 bildet ein Prisma mit einer sechseckigen Grundfläche. Dabei weist die Außenseite 13 der Packungseinheit 11 Kanten 140 und zwischen den Kanten 140 angeordnete rechteckige Teilflächen (der Mantelfläche des Prismas, das von den Packungselementen 12 gebildet wird) auf. Dementsprechend weist auch die umlaufende Wandung 15 rechteckige Wandungselemente 150 auf, welche entsprechende Teilflächen bedecken und somit verschließen.

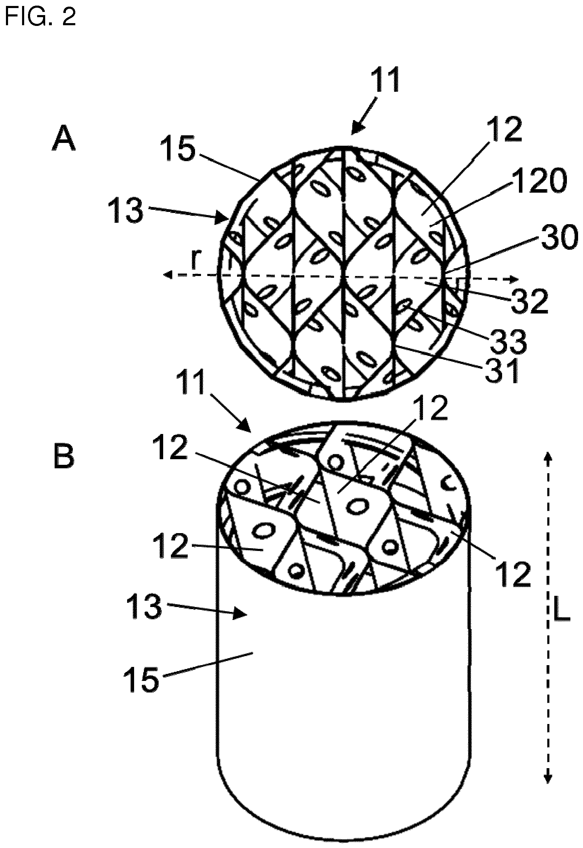

Die Figur 2A zeigt eine schematische Darstellung einer erfindungsgemäßen Packungseinheit 11 in Form eines Kreiszylinders im Querschnitt bezüglich der Längsachse L (siehe Figur 2B) und die Figur 2B zeigt die entsprechende Packungseinheit 11 in einer perspektivischen Ansicht. In der Querschnittsdarstellung der Figur 2A ist eine zu der Längsachse L radiale Richtung r dargestellt.

Die Packungselemente 12 sind analog zu den in Figur 1 gezeigten Packungselemente 12 ausgeformt (das heißt insbesondere, sie weisen ebenfalls eine Austauschfläche 120 auf), die in Figur 2 dargestellten Packungseinheiten 11 bilden aber anstelle eines Sechseck-Prismas einen Kreiszylinder. Entsprechend ist auch die umlaufende Wandung 15 in Form eines Kreiszylinders ausgelegt.

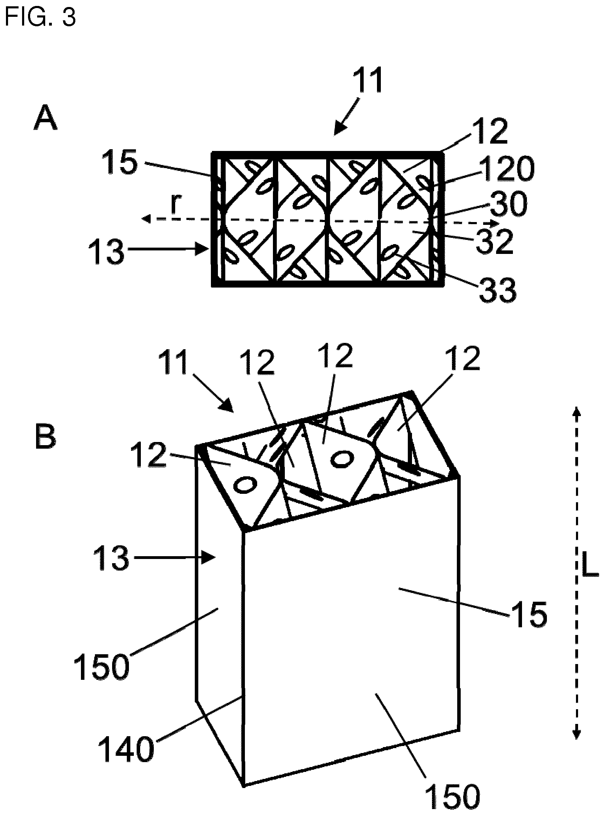

Die Figur 3A zeigt eine schematische Darstellung einer erfindungsgemäßen Packungseinheit 11 in Form eines Quaders im Querschnitt bezüglich der Längsachse L (siehe Figur 3B) und die Figur 3B zeigt die entsprechende Packungseinheit 11 in einer perspektivischen Ansicht, wobei in der Figur 3A eine zu der Längsachse L senkrechte radiale Richtung r bezeichnet ist.

Die Packungselemente 12 der in Figur 3 gezeigten Packungseinheit 11 sind analog zu den in Figur 1 gezeigten Packungselementen 12 ausgeformt, die Packungseinheiten 11 bilden allerdings einen Quader aus. Entsprechend weist die umlaufende Wandung 15 rechteckige Wandungselemente 150 auf, welche die entsprechenden Teilflächen bedecken und verschließen. Bezüglich der weiteren Merkmale der Packung 10 sei auf die Beschreibung der Figuren 1 und 2 verwiesen.

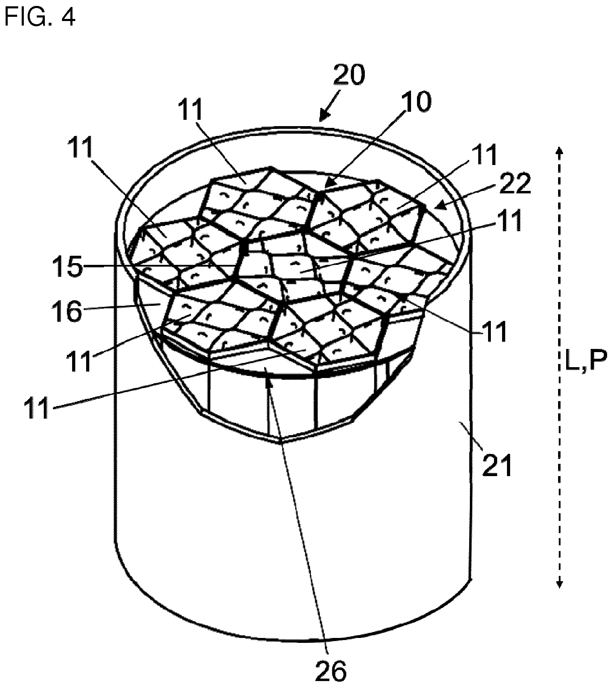

In der Figur 4 ist eine perspektivische Ansicht eines Teils einer erfindungsgemäßen Kolonne 20 gezeigt, die entlang einer Kolonnenlängsachse K erstreckt ist. Die Kolonne 20 weist einen rohrförmigen Mantel 21 auf, der einen Mantelraum 22 umgibt. In dem Mantelraum 22 ist eine Packung 10 aus einer Mehrzahl an erfindungsgemäßen Packungseinheiten 11 der in Figur 1 gezeigten wabenförmigen Ausführungsform derart nebeneinander angeordnet, dass die Längsachsen L der Packungseinheiten 11 (siehe Figur 1) parallel zueinander und parallel zu der Kolonnenlängsachse K verlaufen.

Die Packungseinheiten 11 liegen aufgrund der sechseckigen Form ihrer Grundfläche formschlüssig aneinander an, so dass jeweils zwei Teilflächen der Außenflächen 13 eines Paars von benachbarten Packungseinheiten 11 über ein entsprechendes Wandungselement 150 in Kontakt stehen.

Zwischen den jeweils äußeren Packungseinheiten 11 und der Innenwand des Mantels 21 sind Freiflächen 16 ausgebildet, welche durch Dichtelemente 26 verschlossen sind, so dass beim Betrieb der Kolonne 20 die Phasen F,G, die die Packung 10 durchströmen, nicht über die Freiflächen 16 an den Packungseinheiten 11 vorbeifließen können. Diese Dichtelemente 26 können insbesondere integral mit einer Wandung 15, integral mit dem Mantel 21 oder separat von Wandung 15 und Mantel 21 ausgebildet sein.

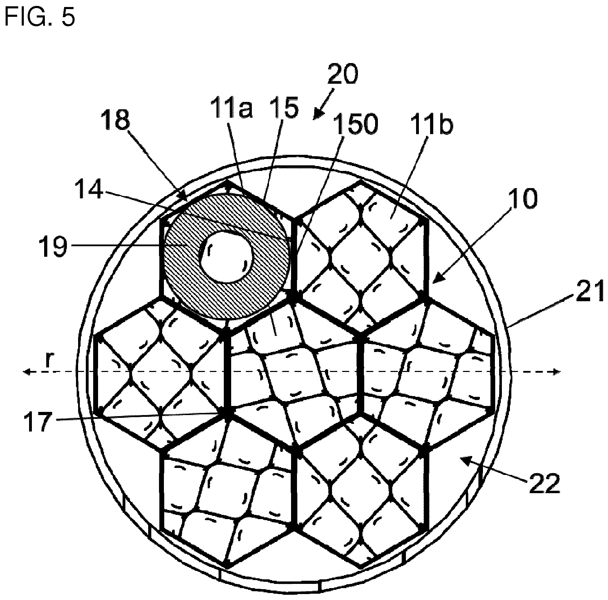

Die Figur 5 zeigt eine Querschnittsdarstellung des in Figur 4 gezeigten Teils der Kolonne 20 senkrecht zur Kolonnenlängsachse K bzw. Längsachse L (siehe Figur 4).

In Figur 5 sind exemplarisch eine erste Packungseinheit 11a und eine benachbarte zweite Packungseinheit 11 b gezeigt, welche ein gemeinsames Wandungselement 150 der Wandung 15 aufweisen, das an einem jeweiligen offenen Abschnitt 14 der Außenseite 13 der ersten Packungseinheit 11 a anliegt. Das heißt, die erste Packungseinheit 11 a weist an dem entsprechenden offenen Abschnitt 14 kein eigenes Wandungselement 150 auf, sondern das Wandungselement 150 wird durch die benachbarte zweite Packungseinheit 11 b bereitgestellt. Dadurch wird Material eingespart und die Wandung 15 zwischen den Packungseinheiten 11a, 11b lässt sich vorteilhafterweise dünner auslegen, was insbesondere einen besseren Wärmetransport über die Wandung 15 erlaubt.

In der beschriebenen Weise können z.B. Packungseinheiten 11 mit nur drei Wandungselementen 150 an drei der Teilflächen ihrer jeweiligen Außenseiten 13 verwendet werden, wobei die drei anderen Teilflächen offene Abschnitte 14 bilden, an denen die Wandungselemente 150 der Wandungen 15 benachbarter Packungseinheiten 11 anliegen.

Außerdem können die benachbarten Packungseinheiten 11, wie in Figur 5 gezeigt, mittels Verbindungselementen 17 miteinander verbunden sein, so dass ein besserer Formschluss zwischen den Packungseinheiten 11 und somit eine Abdichtung für die die Packung 10 durchlaufenden fluiden Phasen F,G erreicht werden kann.

Die Figur 5 zeigt weiterhin exemplarisch für eine Packungseinheit 11 eine senkrecht zur jeweiligen Längsachse L ausgerichtete offene Stirnseite 18 der Packungseinheit 11 und eine die Stirnseite 18 teilweise verschließende Blende 19. Mittels der Blende 19 kann ein Druckverlust einer über die jeweilige Stirnseite 18 in die Packungseinheit 11 eintretenden gasförmigen Phase G bewirkt werden, z.B. um ein Gleichverteilung der gasförmigen Phase G über die verschiedenen Packungseinheiten 11 zu erreichen.

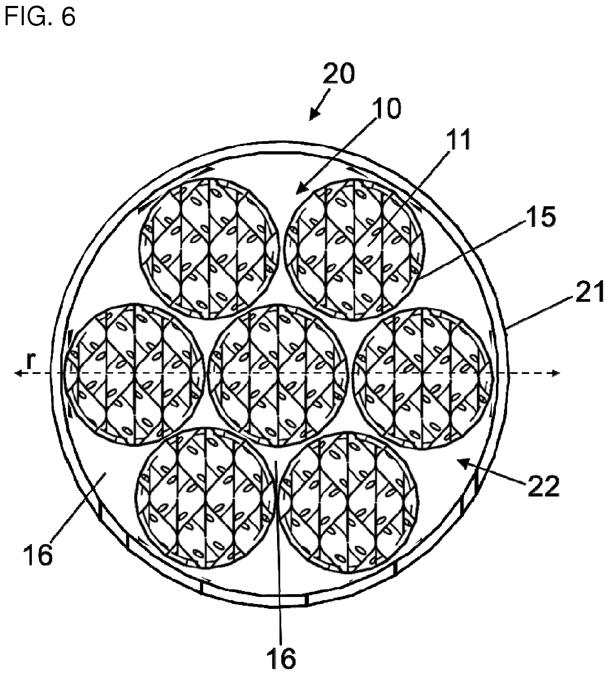

In der Figur 6 ist analog zu der Darstellung in Figur 5 im Querschnitt zur Kolonnenlängsachse K bzw. jeweiligen Längsachse L ein Teil einer Kolonne 20 mit kreiszylinderförmigen Packungseinheiten 11 im Mantelraum 22 der Kolonne 20 gezeigt. Aufgrund ihrer kreisförmigen Grundfläche bilden die Packungseinheiten 11 Freiflächen 16 sowohl zwischen benachbarten Packungseinheiten 11 als auch zwischen den Packungseinheiten 11 und dem Mantel 21 der Kolonne 20 aus.

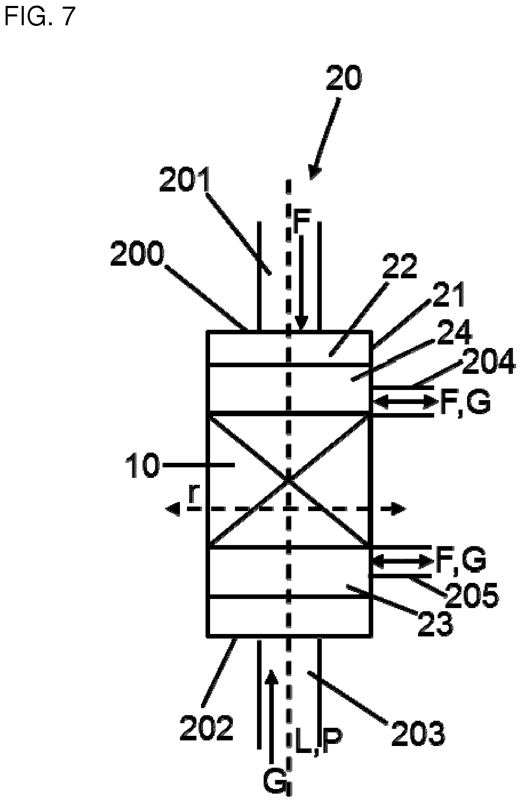

Die Figur 7 zeigt eine erfindungsgemäße Kolonne 20 zum Stoff- und/oder Energieaustausch zwischen einer ersten fluiden Phase F und einer zweiten fluiden Phase G im Längsschnitt.

Die Kolonne 20 weist eine erfindungsgemäße Packung 10 auf, die in einem von einem Mantel 21 begrenzten Mantelraum 22 eines Rohres 20 angeordnet ist.

Hierbei verlaufen die jeweiligen Längsachsen L der hier nicht dargestellten Packungseinheiten 11 der Packung 10 parallel zueinander und parallel zu der Kolonnenlängsachse K. Die Packung 1 weist hier nicht dargestellte Packungseinheiten 11 gemäß der Erfindung auf, z.B. wie in den Figuren 1 bis 3 gezeigt.

Die Kolonne 20 weist einen Kopf 200 mit einer ersten Zuleitung 201 und einen Sumpf 202 mit einer zweiten Zuleitung 203 auf. Über die erste Zuleitung 201 kann eine erste fluide Phase F, z.B. eine flüssige Phase, in den Mantelraum 22 eingeleitet werden, so dass die erste fluide Phase F durch die Packung 10 herabregnet. Dabei kann über die zweite Zuleitung 203 eine zweite fluide Phase G, z.B. eine gasförmige Phase, in den Mantelraum 22 eingeleitet werden, so dass die zweite fluide Phase G in der Packung 10 aufsteigen kann und mit der herabregnenden ersten fluiden Phase F in Kontakt treten kann, so dass ein Stoff- und/oder Energieaustausch zwischen der ersten fluiden Phase F und der zweiten fluiden Phase G erfolgen kann.

Weiterhin weist die gezeigte Kolonne 20 einen Einlass 204 zum Einspeisen eines Fluids, z.B. der ersten fluiden Phase F und/oder der zweiten fluiden Phase G und Auslass 205 zum Abziehen eines Fluids, z.B. der ersten fluiden Phase F und/oder der zweiten fluiden Phase G, auf.

Die Kolonne 20 weist weiterhin einen Flüssigkeitsverteiler 22 zum gleichmäßigen Verteilen einer flüssigen Phase (z.B. der ersten fluiden Phase) auf die Packungseinheiten 11 und einen Gasverteiler 23 zum gleichmäßigen Verteilen einer gasförmigen Phase (z.B. der zweiten fluiden Phase G) auf die Packungseinheiten 11 auf.

Beim Betrieb der Kolonne 20 funktionieren die erfindungsgemäßen Packungseinheiten 11 als unabhängige Einheiten, zwischen denen kein Stoffaustausch erfolgt. Dies führt vorteilhafterweise zu weniger Maldistribution der ersten fluiden Phase F und der zweiten fluiden Phase G in der Packung 10 und erlaubt es, die Eigenschaften der Packung 10 in kleinen Versuchsanordnungen mit einzelnen Packungseinheiten 11 zu simulieren.

**Bezugszeichenliste**

| | |
|---|---|
| 10 | Packung |
| 11 | Packungseinheit |
| 11a | Erste Packungseinheit |
| 11b | Zweite Packungseinheit |
| 12 | Packungselement |
| 13 | Außenseite |
| 14 | Offener Abschnitt |
| 140 | Kante |
| 15 | Wandung |
| 150 | Wandungselement |
| 16 | Freifläche |
| 17 | Verbindungselement |
| 18 | Stirnseite |
| 19 | Blende |
| 20 | Kolonne |
| 21 | Mantel |
| 22 | Mantelraum |
| 23 | Gasverteiler |
| 24 | Flüssigkeitsverteiler |
| 26 | Dichtelement |
| 120 | Austauschfläche |
| 200 | Kopf |
| 201 | Erste Zuleitung |
| 202 | Sumpf |
| 203 | Zweite Zuleitung |
| 204 | Einlass |
| 205 | Auslass |
| 30 | Berg |
| 31 | Tal |
| 32 | Flanke |
| 33 | Durchgangsöffnung |
| L | Längsachse |
| K | Kolonnenlängsachse |
| F | Erste fluide Phase |
| G | Zweite fluide Phase |
| r | Radiale Richtung |

## Patentansprüche

1. Packung (10) zum Stoff- und/oder Energieaustausch zwischen einer ersten fluiden Phase (F) und einer zweiten fluiden Phase (G), aufweisend eine Mehrzahl an Packungseinheiten (11), die jeweils eine Mehrzahl an Packungselementen (12) aufweisen, wobei die Packungseinheiten (11) jeweils eine Längsachse (L) aufweisen, und wobei die jeweilige Packungseinheit (11) entlang der jeweiligen Längsachse (L) von einer ersten fluiden Phase (F) und einer zweiten fluiden Phase (G) durchströmbar ist, und wobei die Packungselemente (12) jeweils eine Austauschfläche (120) aufweisen, die dazu ausgebildet ist, die erste fluide Phase (F) und die zweite fluide Phase (G) beim Durchströmen der jeweiligen Packungseinheit (11) derart in Kontakt treten zu lassen, dass an der Austauschfläche (120) Stoffe und/oder Energie zwischen der ersten fluiden Phase (F) und der zweiten fluiden Phase (G) austauschbar sind,
**dadurch gekennzeichnet,**
**dass** die Packungseinheiten (11) bezüglich ihrer Längsachsen (L) parallel zueinander angeordnet sind, wobei die Packungseinheiten (11) in einer radialen Richtung (r) senkrecht zu den Längsachsen (L) nebeneinander angeordnet sind, und wobei die Packungseinheiten (11) jeweils eine in Bezug auf die jeweilige Längsachse (L) umlaufende, geschlossene Wandung (15) aufweisen.

2. Packung (10) nach Anspruch 1, **dadurch gekennzeichnet, dass** die Packungselemente (12) jeweils eine flächige Struktur bilden.

3. Packung (10) nach Anspruch 1 oder 2, **dadurch gekennzeichnet, dass** die jeweilige Packungseinheit (11) einen Zylinder mit einer elliptischen, kreisförmigen oder vieleckigen Grundfläche, insbesondere einen Kreiszylinder, bildet.

4. Packung (10) nach Anspruch 3, **dadurch gekennzeichnet, dass** die jeweilige Packungseinheit (11) einen Quader bildet.

5. Packung (10) nach Anspruch 3, **dadurch gekennzeichnet,** die jeweilige Packungseinheit (11) ein Prisma mit einer sechseckigen Grundfläche bildet.

6. Packung (10) nach einem der Ansprüche 1 bis 5, **dadurch gekennzeichnet, dass** die Packungseinheiten (11) jeweils eine Außenseite (13) aufweisen, wobei die Außenseite (13) durch eine umlaufende Wandung (15) der jeweiligen Packungseinheit (11) gebildet ist und sich jeweils benachbarte Packungseinheiten (11) an ihren Außenseiten (13) berühren.

7. Packung (10) nach einem der Ansprüche 1 bis 5, **dadurch gekennzeichnet, dass** die Packung zumindest eine erste Packungseinheit (11 a) sowie eine an der ersten Packungseinheit (11 a) anliegende zweite Packungseinheit (11 b) aufweist, wobei die Außenseite (13) der ersten Packungseinheit (11a) einen offenen Abschnitt (14) aufweist, und wobei die Außenseite (13) der zweiten Packungseinheit (11 b) einen an dem offenen Abschnitt (14) anliegenden Abschnitt aufweist, der durch ein Wandungselement (150) der zweiten Packungseinheit (11 b) verschlossen ist, so dass die Packungselemente (12) der beiden Packungseinheiten (11) durch das Wandungselement (150) voneinander getrennt sind.

8. Packung (10) nach einem der vorhergehenden Ansprüche, **dadurch gekennzeichnet, dass** die Packungseinheiten (11) offene Stirnseiten (18) aufweisen, die in einer zur jeweiligen Längsachse (L) senkrechten Ebene liegen, wobei an einer der Stirnseiten (18) eine Blende (19) angeordnet ist, die dazu ausgebildet ist, einen Druckverlust einer über die jeweilige Stirnseite (18) in die Packungseinheit (11) eintretenden gasförmigen Phase zu bewirken.

9. Packung (10) nach einem der vorhergehenden Ansprüche, **dadurch gekennzeichnet, dass** die Packungselemente (12) der Packungseinheiten (11) durch 3D-Drucken gebildet sind.

10. Kolonne (20) zum Stoff und/oder Energieaustausch zwischen einer ersten fluiden Phase (F) und einer zweiten fluiden Phase (G) aufweisend wenigstens eine Packung (10) nach einem der Ansprüche 1 bis 9, wobei die Kolonne (20) eine Kolonnenlängsachse (K) aufweist, und wobei die Kolonne (20) einen Mantel (21) aufweist, der einen Mantelraum (22) umgibt, in dem die wenigstens eine Packung (10) angeordnet ist, und wobei die Längsachsen (L) der Packungseinheiten (11) der wenigstens einen Packung (10) parallel zu der Kolonnenlängsachse (K) verlaufen.

11. Kolonne (20) nach Anspruch 10, **dadurch gekennzeichnet, dass** die Kolonne (20) in einem Querschnitt senkrecht zu der Kolonnenlängsachse (L) wenigstens eine Freifläche (16) zwischen den Packungseinheiten (11) bzw. zwischen den Packungseinheiten (11) und dem Mantel (21) aufweist, wobei die wenigstens eine Freifläche (16) höchstens 20 %, insbesondere höchstens 10 %, einer senkrecht zu der Kolonnenlängsachse (K) verlaufenden Querschnittsfläche des Mantelraums (22) der Kolonne (20) ausfüllt.

12. Kolonne (20) nach Anspruch 10 oder 11, **dadurch gekennzeichnet, dass** die Kolonne (20) wenigstens ein Dichtelement (26) aufweist, das dazu ausgebildet ist, wenigstens eine Freifläche (16) zwischen benachbarten Packungseinheiten (11) der Packung (10) oder zwischen der Packung (10) und dem Mantel (21) der Kolonne (20) zu verschließen.

13. Kolonne (20) nach einem der Ansprüche 10 bis 12, **dadurch gekennzeichnet, dass** die Kolonne (20) einen Einlass (204) zum Einspeisen der ersten fluiden Phase (F) und/oder der zweiten fluiden Phase (G) in die Kolonne (20) und einen mit dem Einlass (204) in Strömungsverbindung stehenden Auslass (205) zum Abziehen der ersten fluiden Phase (F) und/oder der zweiten fluiden Phase (G) aus der Kolonne (20) aufweist, wobei entlang der Kolonnenlängsachse (K) zwischen dem Einlass (204) und dem Auslass (205) lediglich eine Packung (10) mit senkrecht zur Kolonnenlängsachse (K) nebeneinander angeordneten Packungseinheiten (11) angeordnet ist.

14. Verfahren zur Herstellung einer Packung (10) nach einem der Ansprüche 1 bis 9, wobei zumindest die Packungselemente (12) einer Packungseinheit (11) der Packung (10) mittels eines 3D-Druckverfahrens gedruckt werden, wobei insbesondere auch die jeweilige Wandung (15) mittels des 3D-Druckverfahrens gedruckt wird.

15. Verfahren zum Stoff- und/oder Energieaustausch zwischen einer ersten fluiden Phase (F) und einer zweiten fluiden Phase (G), wobei die erste fluide Phase (F) und die zweite fluide Phase (G) durch wenigstens eine Packung (10) nach einem der Ansprüche 1 bis 9 geleitet werden, wobei die Packungseinheiten (12) von der ersten fluiden Phase (F) und der zweiten fluiden Phase (G) entlang der jeweiligen Längsachse (L) durchströmt werden, wobei an der Austauschfläche (120) der Packungselemente (12) Stoffe und/oder Energie zwischen der ersten fluiden Phase (F) und der zweiten fluiden Phase (G) ausgetauscht werden.
